# EUROPÄISCHE PATENTSCHRIFT

(11) **EP 1 248 966 B1**
(45) Veröffentlichungstag und Bekanntmachung des Hinweises auf die Patenterteilung: **02.01.2004**
(21) Anmeldenummer: 00902548.7
(22) Anmeldetag: 10.01.2000
(51) Int. Cl.: G05B 19/414

(54) **UNIVERSELLE BEWEGUNGSSTEUERUNG**
UNIVERSAL MOTION CONTROL
COMMANDE CINEMATIQUE UNIVERSELLE

(43) Veröffentlichungstag der Anmeldung: 16.10.2002
(73) Patentinhaber: SIEMENS AKTIENGESELLSCHAFT, 80333 München (DE)
(72) Erfinder: WUCHERER, Klaus, D-90610 Winkelhaid (DE); BIRZER, Johannes, D-92551 Stulln (DE); HESS, Karl, D-09244 Lichtenau (DE); HEBER, Tino, D-09599 Freiberg (DE); KIRSTE, Steffen, D-09439 Amtsberg-Dittersdorf (DE)
(86) Internationale Anmeldenummer: PCT/DE2000/000058
(87) Internationale Veröffentlichungsnummer: WO 2001/052005

(56) Entgegenhaltungen:
- US-A- 5 877 959
- "CNC-STEUERUNG MIT INTEGRIERTER SPS" WERKSTATT UND BETRIEB,DE,CARL HANSER VERLAG. MUNCHEN, Bd. 128, Nr. 1/02, 1. Februar 1995 (1995-02-01), Seite 80 XP000482644 ISSN: 0043-2792
- "CNC-BEDIENOBERFLACHEN INDIVIDUELL GESTALTEN" ZWF ZEITSCHRIFT FUR WIRTSCHAFTLICHE FERTIGUNG UND AUTOMATISIERUNG,DE,CARL HANSER VERLAG. MUNCHEN, Bd. 88, Nr. 9, 1. September 1993 (1993-09-01), Seite 380 XP000396521 ISSN: 0947-0085

## Beschreibung

Die Erfindung bezieht sich auf eine universelle Bewegungssteuerung mit Engineeringsystem zur Erstellung von Anwenderprogrammen und Run-Time-System, welche funktionell die klassischen Aufgaben einer speicherprogrammierbaren Steuerung und einer numerischen Steuerung in sich vereinigt.

Es ist allgemein üblich, sowohl für eine speicherprogrammierbare Steuerung "SPS" als auch für eine Bewegungssteuerung "NC", jeweils unterschiedliche hierarchische Ablaufebenen zu modellieren, denen Software-Tasks zur Steuerung des technischen Prozesses zugeordnet werden.

Diese Tasks können Systemaufgaben erfüllen, sie können aber auch anwenderprogrammiert sein.

Es ist bekannt, daß bei einer speicherprogrammierbaren Steuerung SPS, als auch bei einer Bewegungssteuerung NC, Anwenderprogramme bzw. vom Anwender erstellte Tasks in den Speicher der jeweiligen Steuerung zugeladen und zur Ausführung gebracht werden können.

Aus DE 197 40 550 A1 ist es bekannt, daß Prozeßsteuerungsfunktionalitäten der speicherprogrammierbaren Steuerungen SPS und Bewegungsfunktionalitäten von NC-Steuerung in einem einheitlichen konfigurierbaren Steuerungssystem integriert werden können. Diese SPS/NC-Integration geschieht in Form des Zusammenschaltens von SPS- und NC-Steuerungsbaugruppen.

Bei dieser Ausführung der Integration wird aber noch keine optimale und effiziente Taskstruktur für die Steuerungsaufgaben erreicht. Außerdem kann bezüglich der Prozeßsteuerung, also auch bezüglich der Bewegungssteuerung, erweiternde Funktionalität nur in Form von Anwenderprogrammen nachgeladen und zur Ausführung gebracht werden.

Der Erfindung liegt daher die Aufgabe zugrunde, für jeweils unterschiedliche Steuerungsaufgaben und unterschiedliche Randbedingungen bzw. Anforderungen des zugrundeliegenden technischen Prozesses in einfacher Weise optimale Ausprägungen der kombinierten SPS/NC-Steuerungen sowohl hinsichtlich ihrer Steuerungsstruktur als auch hinsichtlich ihrer Funktionalität zu erstellen.

Die Erfinder sind dabei von der Erkenntnis ausgegangen, daß durch ein einheitliches konfigurierbares Ablaufebenenmodell für die Steuerungs-Tasks der kombinierten SPS/NC-Steuerung und die Möglichkeit des dynamischen Zuladens von Funktionscode in das Run-Time- und/oder Engineering-System der Steuerung eine optimale Ausprägung einer universellen Bewegungssteuerung möglich sein müßte.

Gemäß der Erfindung wird die o.g. Aufgabe für eine Bewegungssteuerung der eingangs genannten Art dadurch gelöst, daß ein einheitliches Ablaufebenenmodell dergestalt gebildet ist, daß es mehrere Ablaufebenen unterschiedlichen Typs mit unterschiedlicher Priorität aufweist, wobei von höchster bis niedrigster Priorität verschiedene Anwender- und Systemebenen vorgesehen sind und daß jeweils Technologiepakete anwenderseitig in das Engineering- und/oder Run-Time-System ladbar sind, wobei diese Pakete beinhalten:
a) Code-Teile, die die Regelungsspezifika für das Run-Time-System repräsentieren und
b) einen Konfigurierteil, der die Zuordnung dieser Code-Teile zu den jeweiligen Systemebenen, sowie deren Bearbeitungsfolge aufweist, wobei
c) bedarfsweise diese Informationen des Konfigurierteils auch an das Engineering-System weiterleitbar sind.

Neben einer Reduktion des Kommunikationsaufwands innerhalb der Tasks der Steuerung und der erleichterten Programmierung von Prozeßsteuerung und Bewegungssteuerung in einer einheitlichen Programmiersprache mit einheitlicher Erstelloberfläche, liegt ein wesentlicher Vorteil der Erfindung darin, daß durch Zuladen von Software die Möglichkeit einer Skalierung des Run-Time-Systems der Steuerung geschaffen wird. Damit kann der Anwender ausgehend von einem Basissystem der Steuerung den Befehlsvorrat dieses Basissystems dynamisch zugeschnitten auf die jeweiligen Erfordernissen des zugrundeliegenden technologischen Prozesses oder der Steuerungsaufgabe erweitern. Das Basissystem bildet hierbei den Auslieferungsumfang des Run-Time-Systems einer Steuerung, nämlich ein Echtzeitbetriebssystem, ein Ablaufsystem (mit System- und Anwenderebenen), Technologieobjekttypen, Sprachbefehle, den SPS-Befehlsvorrat sowie Kommunikations- (z.B. LAN, E/A) und technologische Schnittstellen (z.B. Antriebe, Geber) zum technischen Prozeß. Im Basissystem befindet sich somit die notwendige Grundfunktionalität einer Steuerung. Das Basissystem ist dabei auf unterschiedlichsten HW-Plattformen (z.B. PC, Antrieb, ...) ablauffähig.

Ein weiterer Vorteil liegt in der Entwicklung und in der Produktion solcher skalierbaren universellen Steuerungen. Steuerungen, die mit einer notwendigen Grundfunktionalität (Basissystem) ausgeliefert werden, lassen sich in großer Stückzahl sehr einfach erstellen (Economies of scale).

Der Anwender hat dann die Möglichkeit, das vorhandene Basissystem gezielt um solche Funktionalitäten zu erweitern, die er wirklich für seine Anwendungen benötigt.

Eine erste Ausgestaltung der Erfindung liegt darin, daß jedes Technologiepaket eine angepaßte Anzahl von Technologieobjekttypen für das Run-Time-System beinhaltet.

Dadurch ist es möglich, auch komplexe und anspruchsvolle Steuerungsfunktionalitäten in einer übersichtlichen und verständlichen Form dem Run-Time-System zuzuladen.

Eine weitere vorteilhafte Ausgestaltung der Erfindung liegt darin, daß des weiteren Bedienoberflächeninformationen, insbesondere Bedienparameter, und/oder Sprachmechanismen und/oder Deklarationsteile den Code-Teilen zuweisbar sind.

Daraus ergeben sich folgende Vorteile:

Um einen Technologieobjekttyp nicht nur als nicht mehr änderbare Konstante verwenden zu können, muß der Technologieobjekttyp dem Erstellsystem die Möglichkeiten der Parametrierung für seine instanziierten Technologieobjekte und insbesondere die vorhandenen Bedienparameter bekanntmachen. Dadurch hat ein Anwender die Möglichkeit, ein Technologieobjekt in der Oberfläche des Erstellsystems flexibel zu parametrieren.

Dadurch, daß auch Sprachmechanismen dem Run-Time-System zuladbar sind, ist es möglich, daß dynamisch der Befehlsvorrat des Run-Time-Systems erweitert werden kann. In einem Anwenderprogramm kann der Anwender einen solchen zugeladenen Befehl in der Form verwenden, als wäre er ein Befehl der Grundfunktionalität des Basissystems.

Wenn ein Anwenderprogramm mit einem solchen zugeladenen Befehl innerhalb einer Anwenderebene des Ablaufebenenmodells abgearbeitet wird, kann bei Aufruf dieses zugeladenen Befehls die dazugehörige Codesequenz des Betriebssystems auf einer der Systemebenen des Ablaufebenenmodells abgearbeitet werden. Dies geschieht ohne Zutun des Anwenders. Durch die Zuordnung von Deklarations- und Beschreibungsteilen zu den Code-Teilen des Technologiepaketes wird die Flexibilität für den Anwender weiterhin erhöht.

Eine weitere vorteilhafte Ausgestaltung der zugrundeliegenden Erfindung liegt darin, daß den Sprachumfang des Engineering-Systems erweiternde Befehle im Technologiepaket vorhanden sind, die bedarfsweise vom Anwender verwendbar sind. Dadurch wird der Grundvorrat der im Engineering-System vorhandenen Sprache um Befehle und Operatoren, die zur Manipulation der Technologieobjekte des zugeladenen Technologiepakets notwendig sind, erweitert. Dieser erweiterte Sprachvorrat ist jeweils auf die zugeladenen Technologiepakete abgestimmt. Der Anwender kann somit in einfacher Weise die Funktionalitäten der zugeladenen Technologieobjekttypen in seinen Anwenderprogrammen benutzen.

Eine weitere vorteilhafte Ausgestaltung der zugrundeliegenden Erfindung liegt darin, daß die Steuerung eine Schnittstelle zum Einspeisen von Technologieobjekttypen aufweist. Diese Schnittstelle kann als Middleware-Plattform verwendet werden, um Funktionalitäten von branchenspezifischen Technologien (z.B. Federn wickeln, Spritzgießen u.s.w.) in Form von Technologieobjekttypen zuzuladen. Diese zuladbaren Technologieobjekttypen müssen nicht proprietär sein, sondern sie können von externen Herstellern bzw. Lieferanten erstellt werden. Der Anwender ist somit bei der Erweiterung der Funktionalität seiner Steuerung nicht mehr an den Steuerungslieferanten gebunden. Durch die einheitliche und offene Schnittstelle kann er zugekaufte spezifische technologische Objekte plug & play-mäßig leicht in seine vorhandene Steuerung integrieren.

Die wesentlichen mit der Erfindung erzielten Vorteile bestehen also insbesondere darin, daß sich in ein einheitliches konfigurierbares Ablaufebenenmodell einer universellen Bewegungssteuerung, d.h. einer kombinierten SPS/NC-Steuerung, sehr leicht neue Funktionalitäten einbinden lassen, indem dynamisch sogenannte Technologiepakete zuladbar sind. Diese Technologiepakete beinhalten zum einen Elemente, die den Befehlssatz des zugrundeliegenden Run-Time-Systems dynamisch erweitern und zum anderen Sprachmechanismen, die im Engineering-System vom Anwender für seine Erstellung der Anwenderprogramme verwendet werden können. Eine solche Steuerung kann somit mit einer Grundfunktionalität ausgeliefert werden, mit denen sich übliche Steuerungsaufgaben bewerkstelligen lassen. Der Anwender kann darauf aufbauend sukzessiv funktionelle Erweiterungen vornehmen, um somit eine Steuerungsfunktionalität zu schaffen, die er wirklich dediziert benötigt. Bei den heutzutage üblichen Steuerungen wird automatisch ein Funktionsumfang geliefert, der nur einem Bruchteil vom Anwender benötigt wird. Einen Großteil der üblicherweise gelieferten Steuerungsfunktionalität benötigt ein Anwender für seine Aufgaben und Anwendung üblicherweise nicht. Wenn ein Anwender aber spezifische Steuerungsfunktionalitäten benötigt, muß er diese mit Hilfe des zur Verfügung stehenden Sprachumfangs der Steuerung in einem Anwenderprogramm selbst möglicherweise umständlich und aufwendig programmieren. Er hat dann die Möglichkeit, so ein selbst erstelltes Anwenderprogramm in das Ablaufebenenmodell des Run-Time-Systems in eine Anwenderebene zu laden. Bei der zugrundeliegenden Erfindung wird dieses Problem aber dadurch gelöst, daß zusätzlich benötigte spezifische Funktionalitäten in Form von Technologiepaketen in die Systemebenen des Run-Time-Systems geladen werden und nicht in die Anwenderebenen. Bei der vorliegenden Erfindung wird durch Zuladen, also der Befehlssatz des Basis- bzw. Run-Time-Systems, erweitert. Diese zugeladenen Befehle können im Engineering-System dann direkt vom Anwender bei der Erstellung der Anwenderprogramme verwendet werden und dadurch, daß diese neuen zugeladenen Befehle in den Systemebenen ablaufen, besteht die Möglichkeit, daß sie sehr schnell zur Ausführung gebracht werden können.

Ein weiterer wichtiger Vorteil liegt in der Tatsache, daß durch eine offene Schnittstelle eine Plattform geschaffen wird, in die sich nicht nur proprietäre, sondern auch extern erstellte technologische Objekte leicht integrieren lassen. Dadurch wird die Voraussetzung geschaffen für einen Markt für technologische Objekte mit spezifischen Anforderungen, Ausprägungen und Funktionalitäten.

Ein Ausführungsbeispiel der Erfindung ist in der Zeichnung dargestellt und wird im folgenden erläutert.

Dabei zeigen:
- FIG 1: eine bekannte Steuerung eines technischen Prozesses mit getrennter speicherprogrammierbarer Steuerung und Bewegungssteuerung. Die Programmierung erfolgt über jeweils separate Programmiersysteme,
- FIG 2: die wesentlichen Ablaufebenen einer klassischen speicherprogrammierbaren Steuerung,
- FIG 3: die wesentlichen Ablaufebenen einer Bewegungssteuerung,
- FIG 4: eine universelle Steuerung, d.h. eine kombinierte SPS/NC-Steuerung mit einem dazugehörigen Programmiersystem,
- FIG 5: das Ablaufebenenmodell der universellen Steuerung,
- FIG 6: zeigt als OO(objektorientiert)-Strukturdiagramm ein Technologiepaket, bestehend aus Code-Anteil, Parameter, Firmware-Konfiguration, Technologieobjekttyp, Sprachmechanismen und Deklarationsteil,
- FIG 7: zeigt als OO-Strukturdiagramm Technologieobjekttypen für das Technologiepaket Kunststoff,
- FIG 8: zeigt, wie der zugeladene Befehl Positionierung POS eines Technologiepakets im Engineering-System vom Anwender in seinen Anwenderprogrammen verwendet werden kann und wie er in den Ablaufebenen der Steuerung zur Ausführung gelangt und
- FIG 9: zeigt das Run-Time-System einer Steuerung mit Application Program Interface (API) als einheitliche Schnittstelle und Kommunikationsplattform für Technologieobjekttypen.

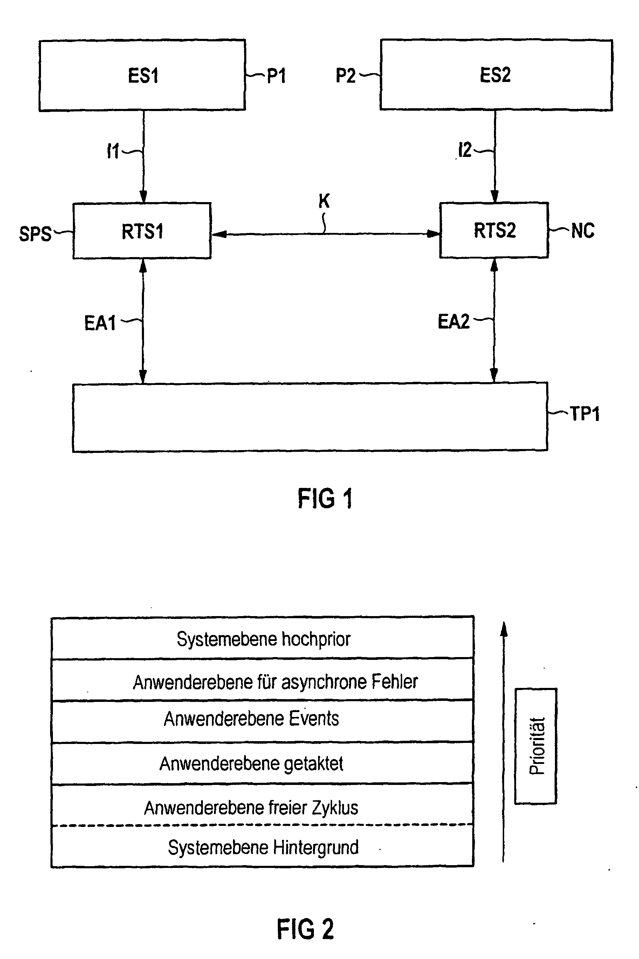

In Darstellung gemäß FIG 1 wird, in Form eines Strukturbildes gezeigt, daß zur Steuerung eines technischen Prozesses TP1 ein paralleler Betrieb einer speicherprogrammierbaren Steuerung SPS und einer Bewegungssteuerung NC stattfindet. Speicherprogrammierbare Steuerung SPS und Bewegungssteuerung NC enthalten jeweils ein Run-Time-System RTS1 bzw. RTS2. Die Kommunikation zwischen den beiden Steuerungen erfolgt über spezielle Hilfsmittel, exemplarisch dargestellt ist ein bidirektionaler Kommunikationskanal K. Die Programmierung der Steuerungen durch den Anwender erfolgt in der Regel in unterschiedlichen Programmiersprachen mit unterschiedlichen Erstelloberflächen. Das heißt, durch jeweils separate Programmier- oder Engineering-Systeme P1, ES1 und P2, ES2. Der wesentliche Nachteil dieser konventionellen Ausführung liegt zum einen in der aufwendigen Kommunikation zwischen den beiden Steuerungen, zum anderen in den separaten und unterschiedlichen Programmier- bzw. Engineering-Systemen P1, ES1 und P2, ES2. Über Ein- und Ausgänge EA1, EA2 der Steuerungen wird der eigentliche technische Prozeß TP1 gesteuert. Zwischen dem Programmiersystem P1 und der speicherprogrammierbaren Steuerung SPS bzw. zwischen dem Programmiersystem P2 und der numerischen Steuerung NC befinden sich Informationspfade I1 bzw. I2, auf denen die Programme in die jeweilige Steuerung geladen werden.

In der Darstellung gemäß FIG 2 sind die wesentlichen Ablaufebenen einer klassischen speicherprogrammierbaren Steuerung (SPS; FIG 1), angeordnet nach ihrer Priorität, gezeigt. Der Prioritätsanstieg ist dabei durch einen Pfeil symbolisiert. In der niederpriorsten Ebene werden, wie durch eine gestrichelte Linie angedeutet, zwei unterschiedliche Aufgaben, nämlich ein freier Zyklus, d.h. "Anwenderebene freier Zyklus" und eine Hintergrund-Systemebene, d.h. "Systemebene Hintergrund", im Round-Robin-Verfahren, also zeitscheibengesteuert, abgewickelt. Der Hintergrund-Systemebene sind z.B. Kommunikationsaufgaben zugeordnet. Bei einer folgenden getakteten Anwenderebene, bezeichnet als "Anwenderebene getaktet", ist der Aufruftakt der Tasks bzw. der Programme dieser Ebene parametrierbar. Es erfolgt eine Überwachung dahingehend, ob die Bearbeitung eines Anwenderprogrammes dieser getakteten Ebene rechtzeitig abgeschlossen ist, bevor das Startereignis erneut auftritt. Läuft die Taktzeit ab, ohne daß das Anwenderprogramm der zugeordneten Ebene fertig abgearbeitet ist, wird eine entsprechende Task einer prioritätsmäßig übernächsten "Anwenderebene für asynchrone Fehler" gestartet. In dieser "Anwenderebene für asynchrone Fehler" kann der Anwender die Behandlung von Fehlerzuständen ausprogrammieren.

Auf die "Anwenderebene getaktet" folgt eine "Anwenderebene Events". Die Reaktion auf externe oder interne Ereignisse (Events) erfolgt innerhalb der "Anwenderebene Events". Ein typisches Beispiel für ein solches Ereignis ist das Überschreiten eines Grenzwerts. In einer "Systemebene hochprior" liegen Aufgaben des Betriebssystems, welche die Arbeitsweise der speicherprogrammierbaren Steuerung sicherstellen.

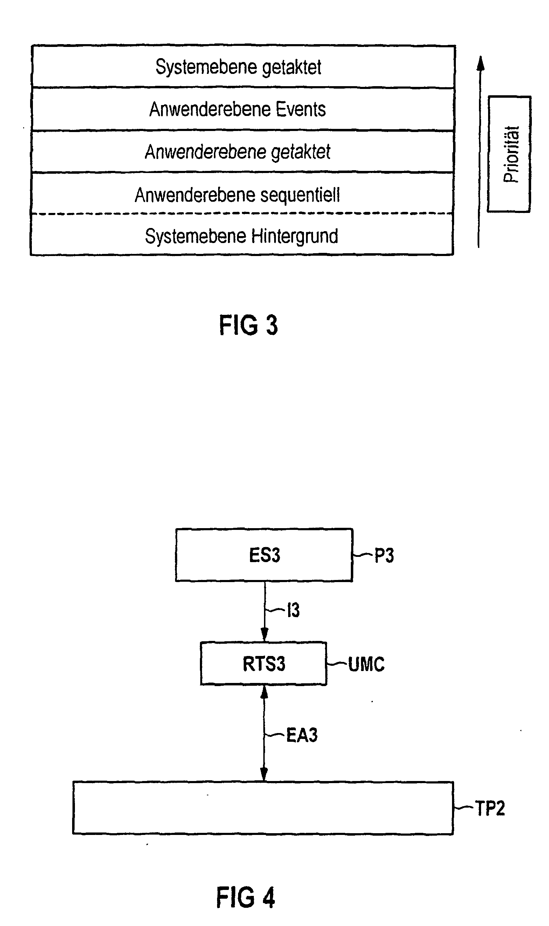

Die Darstellung gemäß FIG 3 zeigt die wesentlichen Ablaufebenen einer Bewegungssteuerung (NC; FIG 1). Auch hierbei sind die einzelnen Ebenen nach ihrer Priorität hierarchisch, wie durch einen Pfeil symbolisiert, angeordnet. Eine "Systemebene Hintergrund" und eine "Anwenderebene sequenziell" haben eine gleiche Priorität, nämlich die niedrigste. Diese aufgabenmäßige Zusammengehörigkeit ist wie bei FIG 2 durch eine gestrichelte Linie symbolisiert. Die Tasks der "Anwenderebene sequenziell" werden zusammen mit den Tasks der "Systemebene Hintergrund" im Round-Robin-Verfahren abgearbeitet. Typische Tasks der "Systemebene Hintergrund" sind z.B. solche für Kommunikationsaufgaben. In der "Anwenderebene sequenziell" laufen die vom Anwender programmierten Programmteile für die eigentliche Steuerungsaufgabe. Stößt die Steuerung in einem dieser Programmteile auf einen Bewegungs- oder Positionierbefehl, wird ein Suspend gesetzt, d.h. das Anwenderprogramm wird an dieser Stelle unterbrochen. Die Abarbeitung dieses Bewegungs- oder Positionierbefehls geschieht in einer höchstprioren "Systemebene getaktet". Ein jeder Lageregler, der in der "Systemebene getaktet" abläuft, führt diesen Bewegungs- bzw. Positionierbefehl aus. Nach Ausführung des Befehls wird in die "Anwenderebene sequenziell" zurückgesprungen und das durch Suspend unterbrochene Anwenderprogramm wird durch ein Resume an der gleichen Stelle fortgesetzt. Die "Systemebene getaktet" enthält neben den schon erwähnten Lagereglern auch den Interpolationsteil der Steuerung.

Auf die niederpriorste Ebene setzt eine "Anwenderebene getaktet" auf. Hier laufen zyklische Tasks ab, z.B. Reglerfunktionalitäten.

In einer folgenden "Anwenderebene Events" sind solche Tasks untergebracht, die auf externe oder interne Ereignisse reagieren. Solche Ereignisse können beispielsweise Alarme sein.

In der Darstellung gemäß FIG 4 wird ein technischer Prozeß TP2 durch eine kombinierte SPS/NC-Steuerung UMC gesteuert. Das Akronym UMC steht für UNIVERSAL-MOTION-CONTROL. Die Verbindung zwischen der Steuerung UMC und dem zugehörigen technischen Prozeß TP2 geschieht bidirektional über Ein-/Ausgänge EA3. Die Programmierung der kombinierten SPS/NC-Steuerung geschieht über ein gemeinsames Programmier- P3 oder Engineering-System ES3, wobei das Engineering-System ES3 ebenso wie bei FIG 1 eine komfortable Oberfläche für das Programmiersystem P3 zur Verfügung stellt. Die damit erstellten Programme werden über einen Informationspfad I3 in ein Run-Time-System RTS3 der universellen Bewegungssteuerung UMC übertragen.

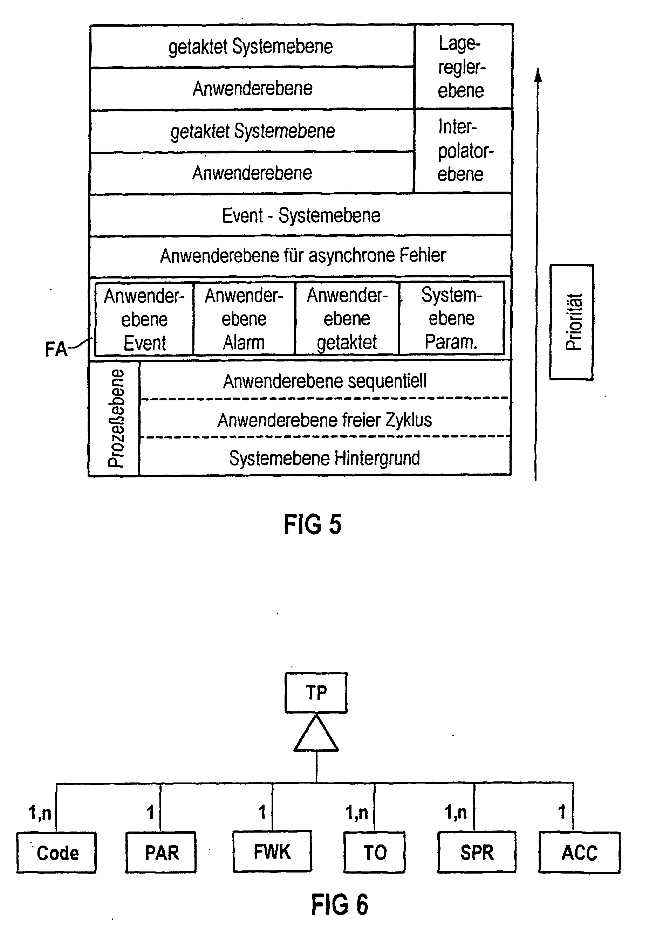

Die Darstellung gemäß FIG 5 zeigt das Ablaufebenenmodell der universellen Bewegungssteuerung. Die Priorisierung der Ebenen wird wie im vorangegangenen durch einen Pfeil in Richtung zur höchsten Priorität angedeutet. Die niederpriorste Ebenengruppe ist die sogenannte "Ebenengruppe Hintergrund-Bearbeitung". Sie besteht aus einer "Systemebene Hintergrund", aus einer "Anwenderebene freier Zyklus" und aus einer "Anwenderebene sequenziell". Die Tasks dieser drei gleichprioren Ebenen (angedeutet durch die gestrichelten Grenzlinien) werden zyklisch im Round-Robin-Verfahren abgearbeitet. Eine auf die "Ebenengruppe Hintergrund-Bearbeitung" höherprior folgende "Ablaufebene" ist eine vom Anwender anforderungsspezifisch frei projektierbare Anwenderebene FA, durch doppelte Umrandung gekennzeichnet, für Alarm- und/oder Event- und/oder Regelungsund/oder sonstige zyklische Tasks. Diese Anwenderebene FA besteht somit explizit aus vier Typen von Ebenen, die wiederum hinsichtlich ihrer Prioritäten innerhalb der Anwenderebene FA vom Anwender staffelbar sind.
- Typ 1:: Anwenderebene Event
- Typ 2:: Anwenderebene Alarm
- Typ 3:: Anwenderebene getaktet
- Typ 4:: Systemebene parametriert

Ebenen dieser Typen können vom Anwender frei wählbar innerhalb der Anwenderebene FA, mit jeweils zugrunde gelegten, vom Anwender vergebbaren Prioritäten, angeordnet werden. Damit hat der Anwender die Möglichkeit, eine den Anforderungen und Randbedingungen der Steuerungsaufgabe und des zu steuernden technischen Prozesses optimale Ausprägung der universellen Bewegungssteuerung zu erreichen.

In der "Anwenderebene Event" sind z.B. Tasks angeordnet, die auf Eingänge der Peripherie reagieren. In der "Anwenderebene Alarm" sind z.B. Tasks angeordnet, die auf Grenzwertüberwachungen reagieren. In der "Anwenderebene getaktet" sind zyklische anwenderprogrammierbare Tasks enthalten. In die "Systemebene parametriert" können von außen zuladbare Programme integriert werden. Dadurch ist es möglich, daß die universelle Bewegungssteuerung dynamisch um zusätzliche technologische Funktionalitäten erweitert werden kann. In diese "Systemebene parametriert" werden üblicherweise Tasks für langsame Regelungs- bzw. Überwachungsaufgaben (z.B. Aufgaben mit Zykluszeiten im Bereich von 100 ms) zugeladen.

Die nächsthöherpriore Ebene im Ablaufebenenmodell der universellen Bewegungssteuerung ist eine "Anwenderebene für asynchrone Fehler". In dieser Ebene kann der Anwender, ähnlich wie bei einer speicherprogrammierbaren Steuerung, die Behandlung von Fehlerzuständen ausprogrammieren. In der "Anwenderebene für asynchrone Fehler" sind z.B. Tasks angesiedelt, die auf technologische Alarme reagieren. Der Anwender hat auch die Möglichkeit, innerhalb dieser "Anwenderebene für asynchrone Fehler" eine für die Produktausprägung spezifische Anzahl von Ebenen zu parametrieren. Der Übersichtlichkeit halber sind Einzelheiten hierzu in der Darstellung nicht gezeigt. Der Anwender kann somit bedarfsweise bestimmten Fehlerereignissen eine bestimmte Priorität zuordnen.

Als nächstes folgt die "Event-Systemebene". Die Tasks der "Event-Systemebene" reagieren auf kritische interne oder externe Ereignisse, wie z.B. Nothalt.

Die nächste Ebene ist eine "Interpolatorebene". Sie enthält eine "getaktete Systemebene" und eine "Anwenderebene".

Die höchstpriore Ebene ist die "Lagereglerebene". Auch sie enthält eine "getaktete Systemebene" und eine "Anwenderebene". Die Anwenderebenen der Lageregler- und Interpolatorebene enthalten Tasks, die im Lageregler- bzw. Interpolatortakt aufgerufen werden. Die Laufzeit dieser Tasks wird überwacht, das Überschreiten einer durch das System festgelegten Zeit führt zum Abbruch der Ebene und zum Auslösen eines asynchronen Fehlers in der "Anwenderebene für asynchrone Fehler".

Der Lageregler hat eine höhere Priorität als der Interpolator, d.h. der Lageregler kann nicht vom Interpolator unterbrochen werden, wobei der Lageregler aber den Interpolator unterbrechen kann.

Im Ablaufebenenmodell der universellen Bewegungssteuerung können prinzipiell innerhalb der einzelnen Ablaufebenen neben den bereits erwähnten, weitere priorisierende Schichtungen vorgesehen sein.

Die Darstellung gemäß FIG 6 zeigt als OO-Strukturdiagramm, wobei die dazugehörigen Kardinalitäten durch eine gängige Ziffern-Notation angezeigt werden, ein Technologiepaket TP mit seinen Bestandteilen:
a) Ablauffähige Code-Teile (Code)
b) Parameter (PAR)
c) Firmware-Konfiguration (FWK)
d) Mindestens einem Technologieobjekttyp (TO)
e) Sprachmechanismen (SPR)
f) Deklarations- und Beschreibungsteil (ACC)

Die 1 bis n Code-Teile (z.B. C-Funktionen) werden beispielsweise für die Bewegungsführung oder die Lageregelung oder für eine andere Technologie verwendet. Die Code-Teile können unter anderem Befehle für Temperaturführung, Temperaturregelung oder für spezielle Technologien wie z.B. Pressen oder Kunststoffverarbeitung beinhalten. Wie diese Code-Teile im Ablaufebenenmodell der Steuerung in die Systemebenen eingehängt werden und in welcher Reihenfolge sie zur Abarbeitung, d.h. Ausführung, gelangen sollen, wird in der Firmware-Konfiguration FWK festgelegt. In dieser steht also die Information, in welche Systemebene ein Code-Teil integriert werden soll und wenn in einer Systemebene mehrere Code-Teile integriert sind, in welcher Reihenfolge diese Code-Teile abgearbeitet werden sollen.

Der Parameter-Teil PAR beinhaltet Oberflächen (Masken, Combo-Boxen, Regeln fuer die Abhängigkeit der Parameter untereinander,...) für das Engineering-System (ES; FIG 1, FIG 4, FIG 8) als auch die Mechanismen für das Run-Time-System (RTS; FIG 1, FIG 4, FIG 9), die eine Parametrierung ermöglichen. Damit hat der Anwender die Möglichkeit, Instanzen von Technologieobjekttypen TO eines Technologiepaketes TP gemäß seinen Anforderungen zu parametrieren.

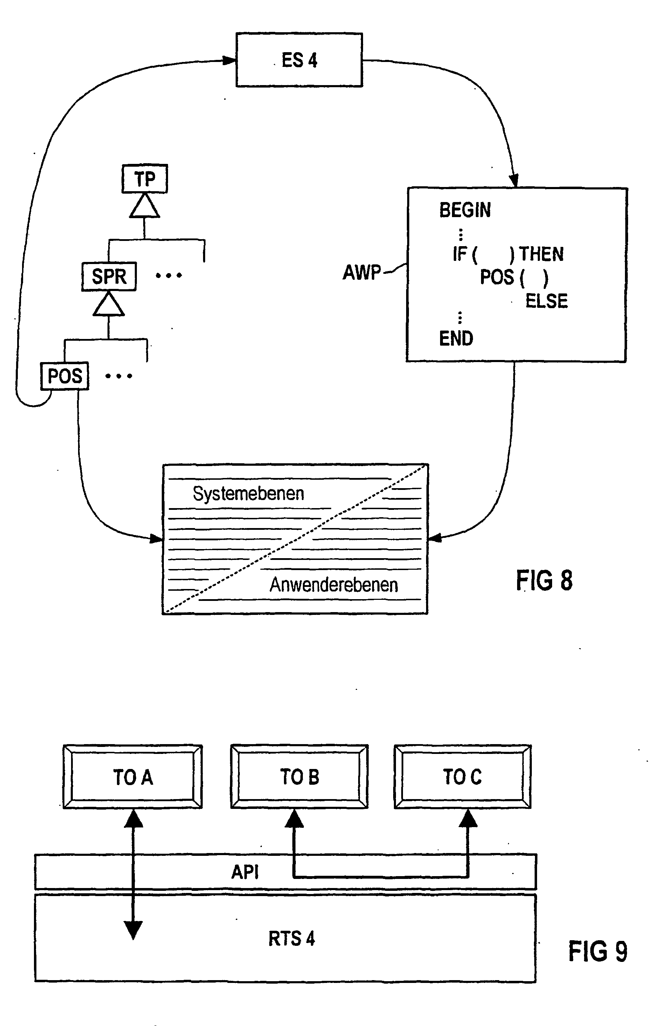

Mit Hilfe der 1 bis n Sprachmechanismen SPR eines Technologiepakets TP läßt sich der Sprachvorrat des Engineering-Systems (ES; FIG 1, FIG 4, FIG 8) um Befehle und Operatoren, die für das zugrundeliegende Technologiepaket TP mit seinen zugehörenden 1 bis n Technologieobjekttypen TO adäquat und sinnvoll sind, erweitern. Sprachmechanismen SPR müssen ins Engineering-System (ES; FIG 1, FIG 4, FIG 8) und ins Run-Time-System (RTS; FIG 1, FIG 4, FIG 9) der Steuerung geladen werden. Nachdem solche Sprachmechanismen (z.B. "erhöhe Temperatur") im Engineering-System (ES; FIG 1, FIG 4, FIG 8) installiert wurden, sind sie im Compiler und in der Oberfläche bzw. im Browser des Engineering-Systems (ES; FIG 1, FIG 4, FIG 8) bekannt und können vom Anwender in seinen Anwenderprogrammen direkt verwendet werden. Durch eine Plug & Play-Technologie wird sichergestellt, daß im Engineering-System (ES; FIG 1, FIG 4, FIG 8) bekannte Sprachmechanismen auch als ablauffähiges Codestück im Run-Time-System (RTS; FIG 1, FIG 4, FIG 9) vorhanden sind. Der Anwender verwendet also die Spezifikation der Sprachmechanismen, um die Implementierung im Run-Time-System (RTS; FIG 1, FIG 4, FIG 9) braucht er sich nicht mehr zu kümmern. In der später noch behandelten FIG 8 wird das Zusammenspiel von Zuladen, Verwenden und Abarbeiten von Sprachmechanismen SPR von Technologiepaketen TP genauer erläutert werden.

Zurück zu FIG 6: In der ACC-Komponente eines Technologiepakets TP befindet sich die Beschreibung aller Sprachelemente, die das Technologiepaket TP enthält, die Beschreibung aller Systemvariablen und aller Typen, die im Technologiepaket TP verwendet werden. Die ACC-Komponente entspricht somit einem Deklarations- und Beschreibungsteil für das Technologiepaket TP. Diese ACC-Komponente wird in erster Linie ins Run-Time-System (RTS; FIG 1, FIG 4, FIG 9) der Steuerung geladen. Dadurch wird sichergestellt, daß sich alle Informationen bzgl. vorhandener Technologiepaketen TP und Technologieobjekttypen TO im Run-Time-System der Steuerung befinden und somit der Anschluß von Bedien- und Beobachtungsgeräten (z.B. Operator Panels) sehr leicht möglich ist.

Nachfolgende Tabelle zeigt, wohin die Bestandteile des Technologiepakets TP innerhalb der Steuerung geladen werden: entweder ins Engineering-System (ES; FIG 1, FIG 4, FIG 8) oder ins Run-Time-System (RTS; FIG 1 u. 4) oder sowohl ins Engineering-System (ES; FIG 1, FIG 4, FIG 8) als auch ins Run-Time-System (RTS; FIG 1, FIG 4, FIG 9).

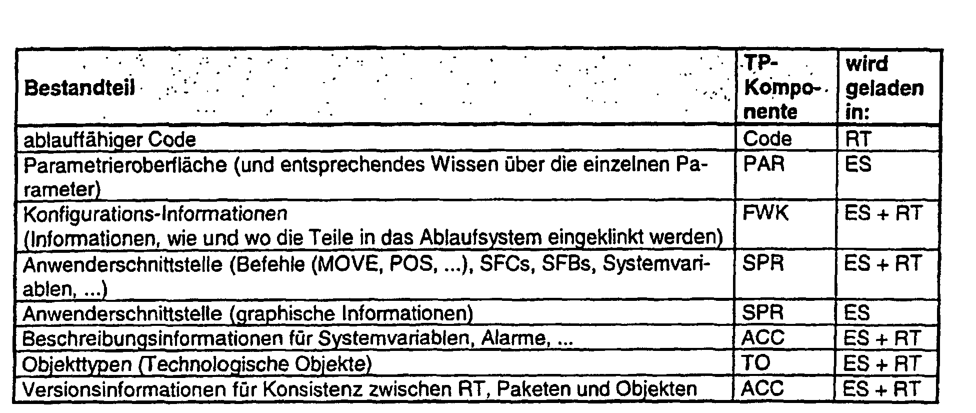

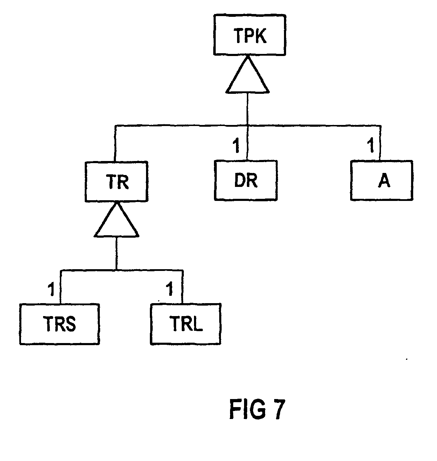

In der Darstellung gemäß FIG 7 werden als OO-Strukturdiagramm exemplarisch mögliche Technologieobjekttypen (TO; FIG 6) für ein Technologiepaket (TP; FIG 6) Kunststoff TPK dargestellt. Bei der Kunststoffbearbeitung bzw. -erzeugung benötigt man üblicherweise eine Temperaturregelung und eine Druckregelung. Der Druck, der dann auch durch den Druckregler DR geregelt werden muß, wird üblicherweise durch eine einfache Achse A aufgebaut, indem die Achse die Materialpaste zusammenpreßt. Für die Temperaturregelung sind in diesem Beispiel zwei Temperaturregler vorgesehen, ein schneller Temperaturregler TRS und ein langsamer Temperaturregler TRL. Wie aus dem 00-Strukturdiagramm ersichtlich, leiten sich der langsame Temperaturregler TRL und der schnelle Temperaturregler TRS aus dem allgemeinen Temperaturregler TR ab. Die beiden Temperaturregler TRS und TRL, der Druckregler DR und die Achse A werden in dem vorliegenden Technologiepaket Kunststoff durch vier Technologieobjekttypen TO repräsentiert, nämlich TRS, TRL, DR und A. Durch die Kardinalität (Ziffer 1) wird angedeutet, daß bei diesem Beispiel genau ein schneller TRS und ein langsamer Temperaturregler TRL, sowie genau ein Druckregler DR und eine Achse A verwendet werden. Hinter dem schnellen Temperaturregler TRS kann sich z.B. ein PID-Regler, hinter dem langsamen Temperaturregler TRL kann sich z.B. ein P-Regler verbergen, das sind aber Implementierungsdetails, die einen Anwender der Funktionalitäten dieser Technologieobjekttypen im Engineering-System (ES; FIG 1 u. 4) verwendet, nicht zu interessieren brauchen. Ein Anwender kann somit die Funktionalitäten dieser Technologieobjekttypen (TO; FIG 6) im Engineering-System (ES; FIG 1 u. 4) verwenden, ohne sich um Implementierungsdetails kümmern zu müssen.

In der Darstellung gemäß FIG 8 ist aufgezeigt, wie ein zugeladener Sprachmechanismus SPR eines Technologiepakets TP in der Steuerung verwendet und abgearbeitet wird. In dem Beispiel wird der Befehl Positionierung POS, der zu einem Sprachmechanismus SPR eines beliebigen Technologiepakets TP gehört, ins Engineering-System ES4 und in eine der Systemebenen des Ablaufebenenmodells des Run-Time-Systems RTS4 geladen. Im Engineering-System ES4 steht dieser Befehl Positionierung POS dem Anwender als Erweiterung des Grundvorrats der im Engineering-System ES4 verwendeten Sprache zur Verfügung. Der Anwender kann dann in seinem Anwenderprogramm AWP diesen Befehl Positionierung POS als ganz normalen Sprachbefehl verwenden. Das Anwenderprogramm AWP, das der Anwender erstellt hat, wird dann in eine der Anwenderebenen des Ablaufebenenmodells der universellen Steuerung geladen und zur Ausführung gebracht. Stößt die Steuerung bei der Abarbeitung des Anwenderprogramms AWP auf diesen Positionierbefehl POS, so wird der dazugehörige Code, der bereits auf eine der Systemebenen geladen wurde, abgearbeitet. Aus Gründen der Übersichtlichkeit wurden die weiteren Inhalte des Technologiepakets TP durch drei Punkte angedeutet. Außerdem könnte der Sprachmechanismus SPR neben dem Positionierbefeht POS weitere Befehle beinhalten, ebenfalls durch drei Punkte angedeutet.

Ein entscheidender Vorteil in dieser Ausführung liegt darin, daß das Laden des ausführbaren Codes für die Sprachmechanismen in die Systemebenen automatisch, d.h. ohne Zutun des Anwenders, erfolgt. Nachdem ein Sprachmechanismen ins Engineering-System ES4 geladen oder installiert wurden, können sie sozusagen plug & play-mäßig vom Anwender verwendet werden.

In der Darstellung gemäß FIG 9 wird gezeigt, daß eine gemeinsame Schnittstelle API innerhalb einer universellen Bewegungssteuerung verwendet werden kann, um die Technologieobjekttypen TO A, TO B, TO C zu integrieren. Dieses Application Program Interface API der universelle Bewegungssteuerung bildet somit sozusagen eine Middleware-Plattform für die Integration und Kommunikation von Technologieobjekttypen TO. Weiterhin ermöglicht diese Schnittstelle API auch die Kommunikation zwischen den Technologieobjekttypen TO und dem Run-Time-System RTS4 der Steuerung. Mit Hilfe dieser einheitlichen Schnittstelle lassen sich auch fremd erstellte Technologiepakete (TP; FIG 6) mit ihren Technologieobjekttypen (TO; FIG 6), sozusagen als "Third Party-Technologiepakete", in die universelle Bewegungssteuerung integrieren. Damit eröffnet sich ein Markt für fremd erstellte Technologiepakete (TP; FIG 6) mit spezifischer Funktionalität für branchenspezifische Technologien (z.B. Federwickeln oder Spritzgießen). Ein Anwender hat dadurch die Möglichkeit ausgehend von einem notwendigen Grundvorrat an Funktionalität einer Steuerung sukzessive diese um seine benötigten spezifischen Funktionalitäten zu erweitern.

## Patentansprüche

1. Universelle Bewegungssteuerung mit Engineeringsystem zur Erstellung von Anwenderprogrammen und Run-Time-System, welche funktionell die klassischen Aufgaben einer speicherprogrammierbaren Steuerung und einer numerischen Steuerung in sich vereinigt,
**dadurch gekennzeichnet,**
**daß** ein einheitliches Ablaufebenenmodell dergestalt gebildet ist, daß es mehrere Ablaufebenen unterschiedlichen Typs mit unterschiedlicher Priorität aufweist, wobei von höchster bis niedrigster Priorität verschiedene Anwender- und Systemebenen vorgesehen sind und daß jeweils Technologiepakete (TP) anwenderseitig in das Engineering- und/oder Run-Time-System (ES1-ES4,RTS1-RTS4) ladbar sind, wobei diese Pakete beinhalten:
a) Code-Teile, die die Regelungsspezifika für das Run-Time-System (RTS1-RTS4) repräsentieren und
b) einen Konfigurierteil (FWK), der die Zuordnung dieser Code-Teile zu den jeweiligen Systemebenen, sowie deren Bearbeitungsfolge aufweist, wobei
c) bedarfsweise diese Informationen des Konfigurierteils (FWK) auch an das Engineering-System (ES1-ES4) weiterleitbar sind.

2. Universelle Bewegungssteuerung nach Anspruch 1,
**dadurch gekennzeichnet,**
**daß** jedes Technologiepaket (TP) eine angepaßte Anzahl von Technologieobjekttypen (TO) für das Run-Time-System (RTS) beinhaltet.

3. Universelle Bewegungssteuerung nach Anspruch 1 oder 2,
**dadurch gekennzeichnet,**
**daß** des weiteren Bedienoberflächeninformationen, insbesondere Bedienparameter (PAR), und/oder Sprachmechanismen (SPR) und/oder Deklarationsteile (ACC) den Code-Teilen zuweisbar sind.

4. Universelle Bewegungssteuerung nach einem der vorstehenden Ansprüche,
**dadurch gekennzeichnet,**
**daß** den Sprachumfang des Engineering-Systems (ES1-ES4) erweiternde Befehle im Technologiepaket (TP) vorhanden sind, die bedarfsweise vom Anwender verwendbar sind.

5. Universelle Bewegungssteuerung nach einem der vorstehenden Ansprüche,
**dadurch gekennzeichnet,**
**daß** die Steuerung eine Schnittstelle (API) zum Einspeisen von Technologieobjekttypen (TO) aufweist.

## Claims

1. Universal motion controller with an engineering system to generate user programs and a run-time system, which functionally combines the classical tasks of a programmable logic controller and a numerical controller, **characterised in that** a consistent run-level model is configured, such that it has several run-levels of various types with different priorities, wherein different user levels and system levels are provided, from greatest to lowest priority, and that technology packets (TP) can be loaded on the user side into the engineering system and/or run-time system wherein these packets contain:
a) code parts, which represent the specifics of the regulations for the run-time system and
b) a configuration part, which contains the allocation of these code parts to the particular system levels, as well as their processing sequence, where
c) if necessary, this information of the configuration part can be passed along to the engineering system.

2. Universal motion controller according to Claim 1, **characterised in that** each technology packet (TP) contains an adapted number of technology object types (TO) for the run-time system (RTS).

3. Universal motion controller according to Claim 1 or 2, **characterised in that** the additional operator interface information, in particular operating parameters (PAR) and/or programming language features (SPR) and/or declaration parts (ACC) can be allocated to the code parts.

4. Universal motion controller according to one of the preceding claims, **characterised in that** the available command library of the engineering system contains expansion commands in the technology packet (TP) that can be used by the user if needed.

5. Universal motion controller according to one of the preceding claims, **characterised in that** the control has an interface (API) for the introduction of technology object types (TO).

## Revendications

1. Commande cinématique universelle qui comporte un système d'ingénierie pour la création de programmes d'application et un système run-time et qui réunit fonctionnellement en elle les tâches classiques d'une commande par programme enregistré et d'une commande numérique,
**caractérisée par le fait qu'**un modèle de niveaux d'exécution uniforme est formé de telle sorte qu'il comporte plusieurs niveaux d'exécution de différents types avec différentes priorités, différents niveaux d'application et de système étant prévus de la priorité la plus haute à la priorité la plus basse, et que des paquets technologiques (TP) peuvent être chargés du côté de l'utilisateur dans le système d'ingénierie et/ou run-time (ES1 à ES4, RTS1 à RTS4), ces paquets contenant :
a) des parties de code qui représentent les spécifications de régulation pour le système run-time (RTS1 à RTS4) et
b) une partie de configuration (FWK) qui comporte l'association de ces parties de code aux niveaux de système respectifs ainsi que leur séquence de traitement,
c) ces informations de la partie de configuration (FWK) pouvant aussi être retransmises si nécessaire au système d'ingénierie (ES1 à ES4).

2. Commande cinématique universelle selon la revendication 1,
**caractérisée par le fait que** chaque paquet technologique (TP) contient un nombre adapté de types d'objets technologiques (TO) pour le système run-time (RTS).

3. Commande cinématique universelle selon la revendication 1 ou 2,
**caractérisée par le fait que** des informations d'interface de contrôle, notamment des paramètres de contrôle (PAR) et/ou des mécanismes de langage (SPR) et/ou des parties de déclaration (ACC), peuvent en plus être attribuées aux parties de code.

4. Commande cinématique universelle selon l'une des revendications précédentes,
**caractérisée par le fait qu'**il existe dans le paquet technologique (TP) des instructions qui étendent l'environnement de langage du système d'ingénierie (ES1 à ES4) et qui peuvent être utilisées par l'utilisateur si nécessaire.

5. Commande cinématique universelle selon l'une des revendications précédentes,
**caractérisée par le fait que** la commande comporte une interface (API) pour l'introduction de types d'objets technologiques (TO).
